# DEMANDE DE BREVET EUROPEEN

(11) **EP 0 526 322 A1**
(43) Date de publication de la demande: **03.02.1993**
(21) Numéro de dépôt: 92402164.5
(22) Date de dépôt: 27.07.1992
(51) Int. Cl.: B23K 26/02

(54) **Tête de soudage au laser et son utilisation pour le manchonnage de tubes**

(30) Priorité: 30.07.1991 FR 9109676
(71) Demandeur: FRAMATOME, 92400 Courbevoie (FR)
(72) Inventeur: Griffaton, Jacques, F-71100 Chalon-Sur-Saone (FR)
(74) Mandataire: Polus, Camille

(57) **Abrégé**

Cette tête de soudage (10) comprend deux ensembles optiques (22,34) destinés respectivement à la collimation et à la focalisation d'un faisceau laser, et un miroir (40) renvoyant le faisceau laser focalisé sur une paroi à souder (14). L'ensemble de focalisation (34) est déplaçable suivant son axe optique (X-X) et sa position est commandée par un doigt palpeur (52) en contact avec la surface (15) de la paroi à souder (14). Lorsqu'on déplace la tête de soudage pour réaliser un cordon de soudure, la position de l'ensemble de focalisation (34) est modifiée en fonction des déplacements du doigt palpeur (52) pour adapter la position radiale du point de focalisation du faisceau laser aux variations de forme de la paroi à souder.

## Description

La présente invention concerne une tête de soudage au laser et son utilisation pour le manchonnage de tubes. Elle est appliquée, en particulier, à la fixation par des cordons de soudure circulaires de manchons de réparation dans des tubes de générateur de vapeur d'un réacteur nucléaire à eau sous pression .

Il est connu d'effectuer ces cordons de soudure au moyen d'une canne de soudage conduisant un faisceau laser de soudage jusqu'à un emplacement de soudage à l'intérieur du manchon de réparation. Cette canne de soudage est habituellement munie d'une tête de soudage rotative, de forme générale cylindrique, comprenant une cellule optique de collimation et de focalisation du faisceau laser et un miroir de renvoi du faisceau laser focalisé sur la surface interne du manchon de réparation. Habituellement, le miroir est incliné à 45° environ par rapport à l'axe optique de la cellule optique.

Préalablement au soudage, on centre la tête de soudage à l'intérieur du manchon de réparation et on règle la distance radiale optimale entre le point de focalisation du faisceau laser et la surface interne du manchon. On forme ensuite un cordon de soudure en faisant tourner la tête de soudage autour de son axe.

Cependant, la surface interne du manchon de réparation peut présenter des défauts de circonférence liés, par exemple, à une ovalisation du manchon. Dans pareil cas, la distance radiale entre le point de focalisation du faisceau laser et la surface interne du manchon varie au cours de la rotation de la tête de soudage.

L'invention a pour but de maintenir la distance radiale optimale entre le point de focalisation du faisceau laser et la surface de la paroi à souder pendant le déplacement de la tête de soudage au cours de la réalisation d'un cordon de soudure, malgré les défauts de forme de la surface.

A cet effet, l'invention a pour objet une tête de soudage au laser du type comprenant un ensemble optique de collimation, un ensemble optique de focalisation muni d'au moins une lentille pour focaliser un faisceau laser de soudage cylindrique émanant de l'ensemble optique de collimation, et un miroir incliné par rapport à l'axe optique de l'ensemble de focalisation et destiné à renvoyer le faisceau laser focalisé sur une paroi à souder, caractérisée en ce qu'elle comprend des moyens de détection de la surface de la paroi au voisinage de l'emplacement de soudage, et en ce que l'ensemble optique de focalisation est monté déplaçable suivant son axe optique dans la tête de soudage, sa position étant commandée par lesdits moyens de détection de la surface de la paroi.

Suivant d'autres caractéristiques de l'invention:
- les moyens de détection comportent un doigt palpeur, sollicité élastiquement vers la surface de la paroi à souder et relié à l'ensemble de focalisation par une tringlerie ;
- le doigt palpeur est déplaçable à peu près parallèlement à l'axe optique du faisceau laser renvoyé par le miroir ;
- la tringlerie est adaptée pour que les déplacements du doigt palpeur et de l'ensemble de focalisation soient d'amplitudes similaires ;
- le doigt palpeur est en contact ponctuel avec la surface de la paroi à souder ;
- l'axe optique de l'ensemble de focalisation est parallèle à la paroi à souder, le miroir est incliné à environ 45° par rapport à cet axe optique, et la tringlerie comporte un levier monté pivotant autour d'un axe d'appui fixe de la tête de soudage, le levier comportant deux bras perpendiculaires entre eux, le premier bras étant solidaire du doigt palpeur et le second bras, perpendiculaire à l'axe optique de l'ensemble de focalisation, étant muni d'une tige de liaison d'axe parallèle à l'axe d'appui, qui coopère avec un support solidaire de l'ensemble de focalisation déplaçable, le plan perpendiculaire à l'axe optique de l'ensemble de focalisation, passant par le point de contact du doigt palpeur sur la paroi à souder, d'une part, et l'axe de la tige de liaison, d'autre part, étant sensiblement équidistants de l'axe d'appui du levier.

L'invention a également pour objet l'utilisation de la tête de soudage précitée pour la réalisation de cordons de soudure circulaires dans des manchons de réparation de tubes de générateur de vapeur d'un réacteur nucléaire à eau sous pression.

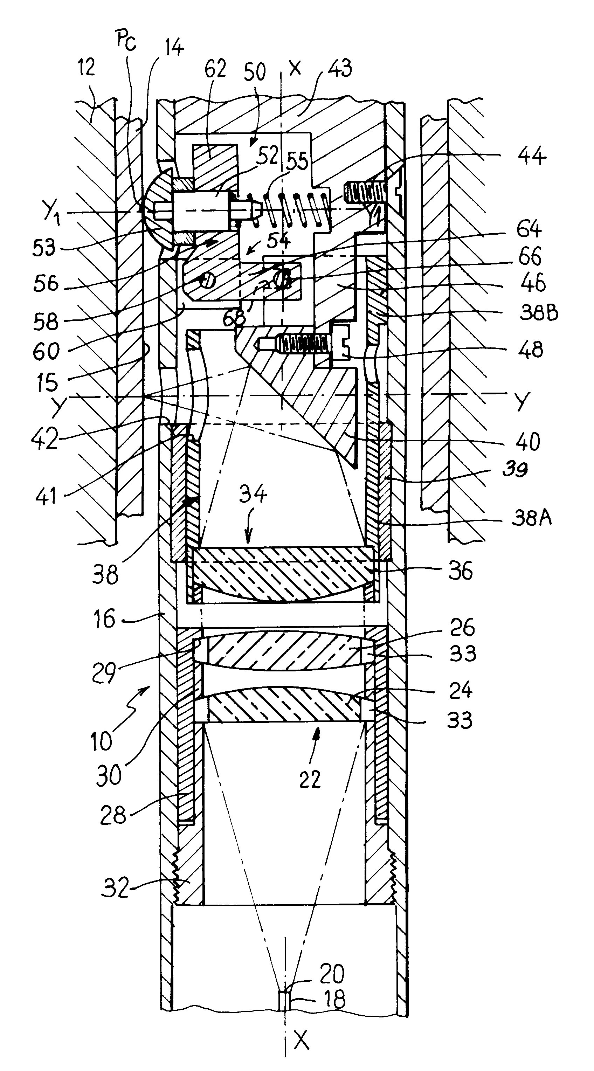

Un exemple de réalisation de l'invention est décrit plus en détail ci-dessous en se référant au dessin annexé comportant une figure unique montrant une vue partielle en coupe longitudinale d'une tête de soudage selon l'invention.

On voit sur la figure une tête de soudage 10 disposée à l'intérieur d'un tube 12 de générateur de vapeur d'un réacteur nucléaire à eau sous pression, dans lequel on a accosté, par des moyens connus, un manchon de réparation 14. La tête de soudage 10 émet un faisceau laser vers un emplacement de soudage de la surface interne 15 du manchon de réparation 14.

La tête de soudage 10 est délimitée par un corps 16, de forme générale tubulaire, à l'intérieur duquel est disposée une fibre optique 18 dont on a représenté l'extrémité distale 20. Cette fibre optique 18 est positionnée suivant l'axe X-X du corps 16 de la tête de soudage, qui coïncide avec les axes confondus du tube 12 et du manchon de réparation 14. La tête de soudage 10 est montée rotative sur une canne de soudage, de type connu, non représentée sur la figure, dans laquelle est disposée la fibre optique 18 et qui est munie de moyens (non représentés) de centrage dans le tube 12.

Comme on le voit sur la figure, la fibre optique 18 émet un faisceau laser divergent en direction d'un ensemble optique de collimation fixe 22 comportant au moins deux lentilles 24,26 disposées sur un porte-lentilles 28 solidaire du corps 16 de la tête de soudage. Les lentilles de collimation 24,26 sont positionnées et fixées sur ce porte-lentilles 28 au moyen d'une butée annulaire 29 de celui-ci, d'une entretoise 30 et d'une bague d'arrêt 32 vissée sur la surface interne du corps 16 de la tête de soudage. Les lentilles de collimation 24,26 comportent des encoches radiales 33 destinées à la circulation d'un gaz utilisé habituellement pour les opérations de soudage en atmosphère contrôlée.

Le faisceau laser émanant de l'ensemble de collimation 22 a une forme quasi cylindrique. Ce faisceau pénètre dans un ensemble optique de focalisation 34. Celui-ci comporte au moins une lentille de focalisation 36 fixée, par des moyens analogues à l'ensemble optique de collimation, sur un porte-lentille 38, de forme générale tubulaire, déplaçable axialement à l'intérieur du corps 16 de la tête de soudage. Le porte-lentille 38 est constitué d'une seule pièce mais comporte deux parties 38A,38B ayant des diamètres extérieurs différents. Une première partie formant manchon 38A, de diamètre extérieur inférieur au diamètre intérieur du corps 16, est coulissante à l'intérieur d'une bague de guidage 39 disposée dans le corps 16, et porte la lentille de focalisation 36. Une seconde partie formant un secteur de bague 38B, qui s'étend sur un peu plus de 180°, a un diamètre extérieur adapté pour que sa surface latérale soit en contact de glissement avec la surface interne du corps 16 de la tête de soudage.

Un miroir 40, incliné à 45° environ par rapport à l'axe optique commun des ensembles de collimation 22 et de focalisation 34 (coïncidant avec l'axe X-X de la tête de soudage) renvoie radialement le faisceau laser focalisé, suivant un axe optique Y-Y, perpendiculaire à l'axe X-X, sur la surface interne 15 du manchon de réparation. Le manchon 38A du porte-lentille 38 et le corps 16 de la tête de soudage comportent respectivement, au droit du miroir 40, une lumière 41 et une fenêtre circulaire 42, en vis à vis l'une de l'autre, permettant le passage du faisceau laser renvoyé par le miroir 40. Le diamètre de la lumière 41 est supérieur à celui de la fenêtre 42. La surface extérieure du manchon 38A du porte-lentille 38 est rainurée, ce qui permet au gaz utilisé pour les opérations de soudage en atmosphère contrôlée de circuler jusqu'à la fenêtre 42 de la tête de soudage, autour du manchon 38A.

L'extrémité distale de la tête de soudage est munie d'un bouchon 43 fixé sur le corps 16 par des vis 44 dont une seule est représentée sur la figure. Le bouchon 43 comporte une saillie axiale 46, en porte-à-faux à l'intérieur du porte-lentille 38, sur laquelle est fixée le miroir 40 au moyen d'une vis 48.

On voit également sur la figure que la tête de soudage 10 comporte des moyens 50 de détection de la surface interne 15 du manchon de réparation 14, disposés au voisinage de la fenêtre 42, au-dessus du faisceau laser renvoyé par le miroir 40, en considérant la figure. Ces moyens 50 comportent un doigt palpeur 52 muni d'une tête 53 en forme de calotte sphérique et relié, par une tringlerie 54, au porte-lentille 38. Le doigt palpeur 52 est sollicité élastiquement par un ressort 55 contre la surface interne 15 du manchon de réparation 14, à peu près suivant un axe Y1-Y1, parallèle à l'axe Y-Y, passant par le point de contact PC de la tête 53 sur le manchon de réparation 14. La tringlerie 54 comporte un levier en forme de L 56 monté pivotant par l'angle du L autour d'un axe d'appui, perpendiculaire aux axes X-X et Y-Y, matérialisé par une tige d'articulation 58 portée par deux flasques 60 solidaires de la tête de soudage, dont une seule est représentée sur la figure. La tige 58 se trouve immédiatement au-dessus de la fenêtre 42 (en considérant la figure).

Le levier 56 comporte deux bras 62,64 perpendiculaires entre eux, dont le premier, orienté vers le haut, est solidaire du doigt palpeur 52 et dont le second, à peu près perpendiculaire à l'axe optique X-X de l'ensemble de focalisation 34, porte une tige de liaison 66, d'axe parallèle à l'axe d'appui 58 du levier, coopérant avec le porte-lentille 38. Les extrémités de la tige de liaison 66 sont reçues dans des gorges transversales 68 du secteur de bague 38B du porte-lentille 38.

L'axe de déplacement Y1-Y1 du doigt palpeur 52 et l'axe de la tige de liaison 66 sont sensiblement équidistants de l'axe d'appui 58 du levier 56. Ainsi le levier 56 transmet les amplitudes des déplacements du doigt palpeur 52 au porte-lentille déplaçable 38.

Par ailleurs, en coopérant avec les gorges transversales 68 du secteur de bague 38B, la tige de liaison 66 immobilise en rotation le manchon 38.

Pour effectuer un cordon de soudure circulaire, on centre la tête de soudage 10 à l'intérieur du manchon 14 en positionnant la fenêtre 42 de la tête de soudage au droit du cordon de soudure à réaliser. On règle, ensuite, par une méthode connue, la distance radiale entre le point de focalisation du faisceau laser et la surface interne 15 du manchon 14. Le cordon de soudure circulaire est obtenu en faisant tourner la tête de soudage autour de son axe X-X. Pendant la rotation de la tête de soudage, la tête 53 du doigt palpeur 52 est maintenue au contact de la surface interne 15 du manchon de réparation. Les défauts de circonférence de la surface interne 15 du manchon de réparation provoquent des déplacements du doigt palpeur 52, à peu près suivant l'axe Y1-Y1. Ces déplacements provoquent, par l'intermédiaire de la tringlerie 54, le déplacement axial de la lentille de focalisation 36 par rapport au miroir fixe 40 et, par conséquent, le déplacement radial, par rapport à la tête 10, du point de focalisation du faisceau laser renvoyé par le miroir 40. Les caractéristiques géométriques de la tringlerie 54 et du miroir 40, décrites précédemment, sont telles que les déplacements du doigt palpeur 52 sont transmis au point de focalisation du faisceau laser en conservant sensiblement leur sens et leur amplitude. Ainsi, la distance radiale précitée reste constante. Du fait que l'ensemble de focalisation 34 reçoit un faisceau circulaire émanant de l'ensemble de collimation 22, les déplacements relatifs entre les ensembles optiques de collimation 22 et de focalisation 34 ne modifient pas la forme du faisceau focalisé, après la lentille 36.

Par ailleurs, le miroir restant immobile au cours des déplacements axiaux de l'ensemble de focalisation du faisceau laser, on est assuré de réaliser un cordon de soudure dans un plan perpendiculaire à l'axe X-X de la tête de soudage. D'autre part, le faisceau laser focalisé reste centré au milieu de la fenêtre circulaire 42 de la tête de soudage. Cette fenêtre 42 a un petit diamètre permettant une meilleure protection des éléments optiques de la tête de soudage contre les sallissures produites pendant le soudage.

## Revendications

1. Tête de soudage au laser du type comprenant un ensemble optique de collimation (22), un ensemble optique de focalisation (34) muni d'au moins une lentille (36) pour focaliser un faisceau laser de soudage cylindrique émanant de l'ensemble optique de collimation (22), et un miroir (40) incliné par rapport à l'axe optique (X-X) de l'ensemble de focalisation (34) et destiné à renvoyer le faisceau laser focalisé sur une paroi à souder (14), caractérisée en ce qu'elle comprend des moyens de détection (50) de la surface (15) de la paroi (14) au voisinage de l'emplacement de soudage, et en ce que l'ensemble optique de focalisation (34) est monté déplaçable suivant son axe optique (X-X) dans la tête de soudage, sa position étant commandée par lesdits moyens de détection (50) de la surface de la paroi.

2. Tête de soudage selon la revendication 1, caractérisée en ce que les moyens de détection (50) comportent un doigt palpeur (52), sollicité élastiquement vers la surface (15) de la paroi à souder (14) et relié à l'ensemble de focalisation (34) par une tringlerie (54).

3. Tête de soudage selon la revendication 2, caractérisée en ce que le doigt palpeur (52) est déplaçable à peu près parallèlement à l'axe optique (Y-Y) du faisceau laser renvoyé par le miroir (40).

4. Tête de soudage selon la revendication 2 ou 3, caractérisée en ce que la tringlerie (54) est adaptée pour que les déplacements du doigt palpeur (52) et de l'ensemble de focalisation (34) soient d'amplitudes similaires.

5. Tête de soudage selon l'une quelconque des revendications précédentes, caractérisée en ce que le doigt palpeur (52) est en contact ponctuel avec la surface (15) de la paroi à souder (14).

6. Tête de soudage selon les revendications 2 à 5 prises ensembles, caractérisée en ce que l'axe optique (X-X) de l'ensemble de focalisation (34) est parallèle à la paroi à souder (14), en ce que le miroir (40) est incliné d'environ 45° par rapport à cet axe optique (XX), et en ce que la tringlerie (54) comporte un levier (56) monté pivotant autour d'un axe d'appui fixe (58) de la tête de soudage, le levier (56) comportant deux bras (62,64) perpendiculaires entre eux, le premier bras étant solidaire du doigt palpeur (52) et le second bras (64), perpendiculaire à l'axe optique (X-X) de l'ensemble de focalisation (34), étant muni d'une tige de liaison (66) d'axe parallèle à l'axe d'appui (58) qui coopère avec un support (38) solidaire de l'ensemble de focalisation (34) déplaçable, le plan perpendiculaire à l'axe optique (X-X) de l'ensemble de focalisation (34), passant par le point de contact (PC) du doigt palpeur (52) sur la paroi à souder (14), d'une part, et l'axe de la tige de liaison (66), d'autre part, étant sensiblement équidistants de l'axe d'appui (58) du levier (56).

7. Tête de soudage selon l'une quelconque des revendications précédentes, utilisée pour la réalisation de cordons de soudure circulaires dans des manchons de réparation (14) de tubes (12) de générateur de vapeur d'un réacteur nucléaire à eau sous pression.
